# EUROPEAN PATENT APPLICATION

(11) **EP 4 644 737 A1**
(43) Date of publication of application: **05.11.2025**
(21) Application number: 23912086.8
(22) Date of filing: 25.12.2023
(51) Int. Cl.: F16J 15/34, F16C 17/04

(54) **SLIDING COMPONENT**

(30) Priority: 26.12.2022 JP 2022208344
(71) Applicant: Eagle Industry Co., Ltd., Minato-ku Tokyo 105-8587 (JP)
(72) Inventor: SUZUKI, Hiroshi, Tokyo 105-8587 (JP); UCHIDA, Kenta, Tokyo 105-8587 (JP); FUKUDA, Shogo, Tokyo 105-8587 (JP); OU, Iwa, Tokyo 105-8587 (JP); IMURA,Tadatsugu, Tokyo 105-8587 (JP)
(74) Representative: WSL Patentanwälte Partnerschaft mbB
(86) International application number: PCT/JP2023/046518
(87) International publication number: WO 2024/143307

(57) **Abstract**

There are provided sliding components capable of reducing leakage and enhancing lubrication. In sliding components 10 and 20 of which a pair of sliding surfaces 11 and 21 rotate relative to each other and which partition a sealed fluid space S1 and a leakage space S2 off from each other, the sliding surface 11 is provided with a dynamic pressure generation groove 15 and a fluid recovery mechanism R1 overlapping the dynamic pressure generation groove 15 in a radial direction on a leakage space S2 side of the dynamic pressure generation groove 15, and the fluid recovery mechanism R1 is composed of a plurality of fluid recovery grooves 12, 13, and 14 arranged in the radial direction.

## Description

### {TECHNICAL FIELD}

The present invention relates to sliding components, for example, sliding components that rotate relative to each other, for example, sliding components used in a shaft sealing device that seals a rotating shaft of a rotating machine in an automobile, a general industrial machine, or other seal fields, or sliding components used in a bearing of a machine in an automobile, a general industrial machine, or other bearing fields.

### {BACKGROUND ART}

For example, a mechanical seal serving as a shaft sealing device that prevents leakage of a sealed fluid includes a pair of annular sliding components which rotate relative to each other and of which sliding surfaces slide on each other. In such a mechanical seal, in recent years, reducing the loss of energy due to sliding has been desired for environmental measures and the like.

For example, in a mechanical seal as described in Patent Citation 1, a plurality of dimples are provided in a circumferential direction on a sliding surface of a stationary seal ring. The dimple is formed in a crank shape including a cavitation formation region and a positive pressure generation region. The cavitation formation region is disposed on a low-pressure fluid side, and is formed in a groove shape extending in the circumferential direction. The positive pressure generation region is disposed on a high-pressure fluid side, and is formed in a groove shape extending in the circumferential direction. In addition, a downstream end of the cavitation formation region in a rotation direction and an upstream end of the positive pressure generation region in the rotation direction communicate with each other.

As a rotating seal ring rotates, the dimple guides a sealed fluid from the cavitation formation region on an upstream side in the rotation direction to the positive pressure generation region on a downstream side in the rotation direction, and generates positive pressure at the downstream end. Since a mating sliding surface floats due to the positive pressure and the sealed fluid is introduced into a gap between the sliding surfaces, the loss of energy due to sliding can be reduced. In addition, the dimple can recover the sealed fluid that has moved to a low-pressure space side, due to the negative pressure generated at the upstream end of the cavitation formation region in the rotation direction.

### {CITATION LIST}

### {Patent Literature}

Patent Citation 1: JP 6058018 B2 (Pages 7 and 8, FIG. 4)

### {SUMMARY OF INVENTION}

### {Technical Problem}

In such sliding components as in Patent Citation 1, since the positive pressure generation region of the dimple is disposed close to a sealed fluid space, a part of the sealed fluid can be recovered on the high-pressure fluid side. However, the positive pressure generation regions of the dimples are disposed to be distributed in the circumferential direction. As a result, since the positive pressure generated in the circumferential direction between the sliding surfaces becomes uneven, a floating balance is difficult to achieve, so that lubrication is impaired, which is a risk.

The present invention has been made in view of such problems, and an object of the present invention is to provide sliding components capable of reducing leakage and enhancing lubrication.

### {Solution to Problem}

In order to solve the foregoing problems, sliding components according to the present invention are sliding components of which a pair of sliding surfaces rotate relative to each other and which partition a sealed fluid space and a leakage space off from each other. At least one of the sliding surfaces is provided with a dynamic pressure generation groove and a fluid recovery mechanism overlapping the dynamic pressure generation groove in a radial direction on a leakage space side of the dynamic pressure generation groove. The fluid recovery mechanism is composed of a plurality of fluid recovery grooves arranged in the radial direction. According to the aforesaid feature of the present invention, a sealed fluid flowing out from the dynamic pressure generation groove can be recovered by the plurality of fluid recovery grooves. As a result, leakage can be reduced and lubrication can be enhanced.

It may be preferable that each of the fluid recovery grooves includes at least one pressure generation portion, which is a circumferential end portion, a curved portion, or a bent portion, at a part of the fluid recovery groove. According to this preferable configuration, positive pressure can be generated not only in the dynamic pressure generation groove but also at the pressure generation portions of the plurality of fluid recovery grooves that are formed. As a result, positive pressure can be generated at a plurality of locations, so that the floating balance between the sliding components can be improved.

It may be preferable that at least one of the fluid recovery grooves includes a first groove portion overlapping the dynamic pressure generation groove in the radial direction on the leakage space side of the dynamic pressure generation groove, and a second groove portion overlapping the dynamic pressure generation groove in the circumferential direction on a downstream side of the dynamic pressure generation groove in the relative rotation. According to this preferable configuration, since positive pressure can be generated at least at a portion where the second groove portion is curved or bent with respect to the first groove portion, a larger dynamic pressure can be generated, and the sealed fluid in the fluid recovery grooves can be guided toward the sealed fluid space. In addition, the sealed fluid that attempts to flow out from the dynamic pressure generation groove and flow to the leakage side is recovered by the first groove portion of the fluid recovery groove, and the excess sealed fluid on the sliding surface which may lead to leakage is recovered by the second groove portion located on the downstream, and is returned to the sealed fluid side. Accordingly, leakage is suppressed, and the prevention of leakage is performed more reliably.

It may be preferable that a dynamic pressure generation groove other than the dynamic pressure generation groove is further provided on the sliding surface between the plurality of fluid recovery grooves. According to this preferable configuration, dynamic pressure can be generated at more positions while recovering the sealed fluid.

It may be preferable that the fluid recovery groove closest to a dynamic pressure generation groove side among the plurality of fluid recovery grooves constituting the fluid recovery mechanism communicates with the sealed fluid space. According to this preferable configuration, the fluid recovery groove communicates with the sealed fluid space, so that the fluid recovery function is improved. Therefore, the sliding components have a high efficiency in recovering the sealed fluid that has flowed out from the dynamic pressure generation groove.

It may be preferable that a bent portion between the first groove portion and the second groove portion of the fluid recovery groove which is curved or bent from the first groove portion and extends toward a sealed fluid space side in the radial direction overlaps, in the circumferential direction, an upstream end of the first groove portion of an adjacent fluid recovery groove on the downstream side in the relative rotation. According to this preferable configuration, the fluid recovery groove can efficiently recover the sealed fluid that has flowed into a gap between the sliding surfaces from the pressure generation portion of the adjacent fluid recovery groove on an upstream side in the relative rotation.

It may be preferable that adjacent two of the first groove portions are aligned in one circle line. According to this preferable configuration, the first groove portion can guide the sealed fluid along the rotation direction. In addition, the sealed fluid that has flowed into the gap between the sliding surfaces from the pressure generation portion of the adjacent fluid recovery groove on the upstream side in the relative rotation is also easily moved along the rotation direction. Accordingly, the sliding components can evenly recover the sealed fluid.

It may be preferable that the first groove portion of the fluid recovery groove and the second groove portion of an adjacent fluid recovery groove on an upstream side in the relative rotation overlap each other in the radial direction. The dynamic pressure generation groove is surrounded by the fluid recovery groove and the second groove portion of the adjacent fluid recovery groove on the upstream side in the relative rotation. According to this preferable configuration, in addition to improving the floating balance between the sliding components, the sealed fluid that has flowed into the gap between the sliding surfaces from each of the dynamic pressure generation grooves or the pressure generation portion of each of the fluid recovery grooves can be recovered and reliably prevented from leaking in the radial direction. Further, since the sealed fluid recovered by the fluid recovery grooves can be discharged into the sealed fluid space from a plurality of locations in the circumferential direction, not only can the stagnation of the deteriorated sealed fluid between the sliding surfaces be suppressed, but the accumulation of contamination or the like can also be prevented.

### {BRIEF DESCRIPTION OF DRAWINGS}

FIG. 1 is a longitudinal sectional view illustrating one example of a mechanical seal including sliding components according toa first embodiment of the present invention.
FIG. 2 is a view of a sliding surface of a stationary seal ring in the first embodiment when viewed in an axial direction.
FIG. 3 is a partially enlarged view of FIG. 2.
FIG. 4 is an enlarged view of a modification example of the sliding surface of the stationary seal ring in the first embodiment when viewed in the axial direction.
FIG. 5 is an enlarged view of another modification example of the sliding surface of the stationary seal ring in the first embodiment when viewed in the axial direction.
FIG. 6 is an enlarged view of a sliding surface of a stationary seal ring as one of sliding components according to a second embodiment of the present invention when viewed in the axial direction.
FIG. 7 is an enlarged view of a sliding surface of a stationary seal ring as one of sliding components according to a third embodiment of the present invention when viewed in the axial direction.
FIG. 8 is an enlarged view of a sliding surface of a stationary seal ring as one of sliding components according to a fourth embodiment of the present invention when viewed in the axial direction.
FIG. 9 is a view of a sliding surface of a stationary seal ring as one of sliding components according to a fifth embodiment of the present invention when viewed in the axial direction.
FIG. 10 is an enlarged view of a sliding surface of a stationary seal ring as one of sliding components according to a sixth embodiment of the present invention when viewed in the axial direction.
FIG. 11 is an enlarged view of a sliding surface of a stationary seal ring as one of sliding components according to a seventh embodiment of the present invention when viewed in the axial direction.
FIG. 12 is an enlarged view of a sliding surface of a stationary seal ring as one of sliding components according to an eighth embodiment of the present invention when viewed in the axial direction.
FIG. 13 is a view of a sliding surface of a stationary seal ring as one of sliding components according to a ninth embodiment of the present invention when viewed in the axial direction.

### {DESCRIPTION OF EMBODIMENTS}

Modes for implementing sliding components according to the present invention will be described below based on embodiments.

### {First embodiment}

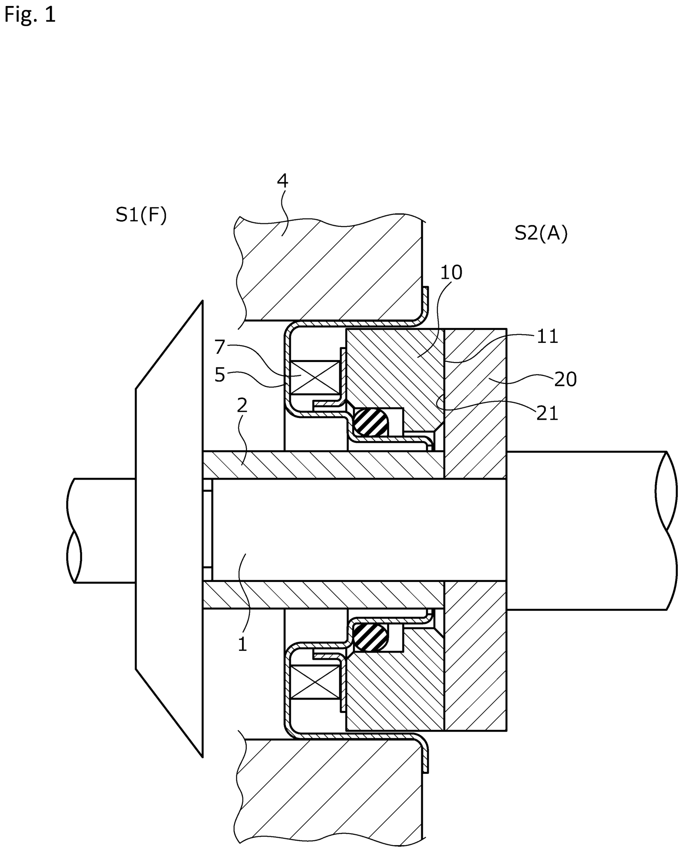

Sliding components according to a first embodiment of the present invention will be described with reference to FIGS. 1 to 5. Incidentally, in the present embodiment, a mode in which the sliding components are applied to a mechanical seal will be described as an example.

In addition, in the mechanical seal, a sealed fluid F serving as a first fluid and atmosphere A serving as a second fluid will be described as existing in an inner space S1 and an outer space S2, respectively, and a radial inner side and a radial outer side of the sliding components constituting the mechanical seal will be described as a sealed fluid space side (high-pressure side) and a leakage space side (low-pressure side), respectively. In addition, for convenience of description, in the drawings, dots may be added to grooves and the like formed on a sliding surface.

A mechanical seal illustrated in FIG. 1 is an outside mechanical seal that seals the sealed fluid F attempting to leak from the radial inner side toward the radial outer side of sliding surfaces, and that allows the outer space S2 to communicate with the atmosphere A. Incidentally, in the present embodiment, a mode in which the sealed fluid F is a high-pressure liquid and the atmosphere A is a gas having a lower pressure than the sealed fluid F will be provided as an example.

The mechanical seal is mainly composed of a stationary seal ring 10 serving as a sliding component having an annular shape, and a rotating seal ring 20 serving as another sliding component having an annular shape. The rotating seal ring 20 is provided on a rotating shaft 1 via a sleeve 2 to be rotatable together with the rotating shaft 1. The stationary seal ring 10 is provided on a seal cover 5, which is fixed to a housing 4 of an attached device, to be non-rotatable and movable in an axial direction. The stationary seal ring 10 is biased in the axial direction by an elastic member 7, and a sliding surface 11 of the stationary seal ring 10 and a sliding surface 21 of the rotating seal ring 20 slide in close contact with each other. Incidentally, the sliding surface 21 of the rotating seal ring 20 is a flat surface, and a recessed portion such as a groove is not provided on the flat surface.

The stationary seal ring 10 and the rotating seal ring 20 are typically made of SiC (as an example of hard material) or a combination of SiC and carbon (as an example of soft material), but are not limited thereto, and any sliding material can be applied as long as the sliding material is used as a sliding material for a mechanical seal. Incidentally, examples of SiC include sintered bodies using boron, aluminum, carbon, or the like as a sintering aid, and materials consisting of two or more phases with different components and compositions, such as SiC in which graphite particles are dispersed, reaction-sintered SiC consisting of SiC and Si, SiC-TiC, and SiC-TiN. As the carbon, carbon in which a carbonaceous substance and a graphitic substance are mixed, resin-molded carbon, sintered carbon, and the like can be used. In addition, in addition to the above-described sliding materials, metal materials, resin materials, surface modification materials (e.g., coating materials), composite materials, and the like can also be applied.

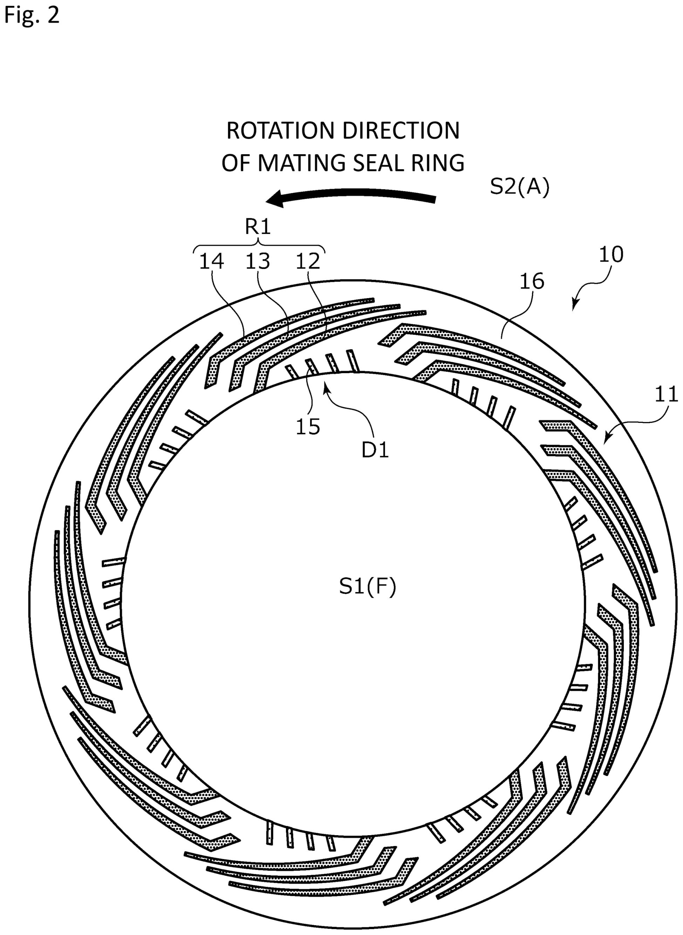

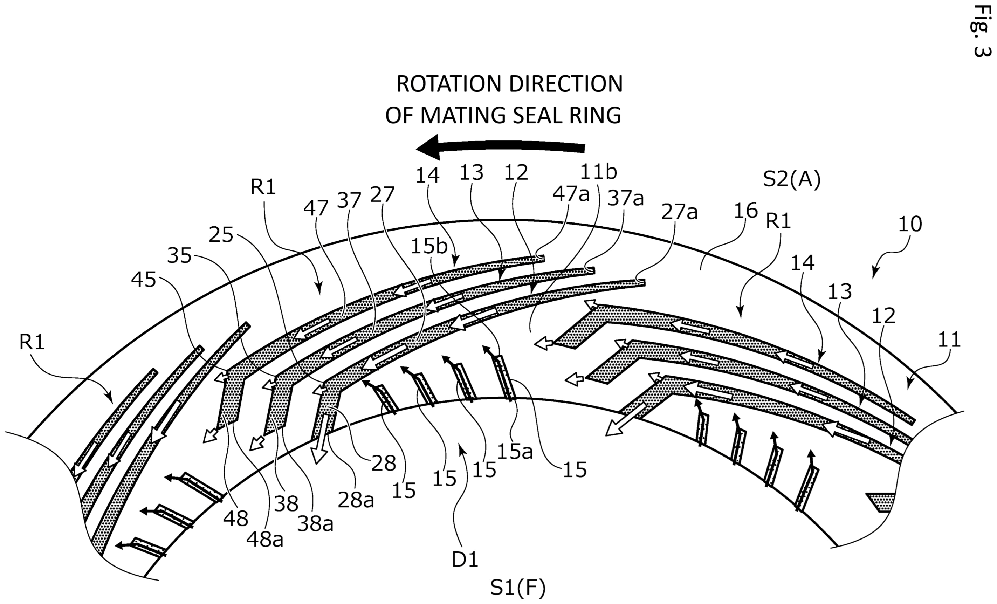

As illustrated in FIGS. 2 and 3, the rotating seal ring 20 that is a mating seal ring slides counterclockwise relative to the stationary seal ring 10 as indicated by a solid arrow.

A plurality of fluid recovery mechanisms R1 (nine sets in the present embodiment) and a plurality of dynamic pressure generation mechanisms D1 (nine sets in the present embodiment) are formed on the sliding surface 11 of the stationary seal ring 10. One set of the fluid recovery mechanism R1 is composed of three pumping grooves provided in a radial direction, in more detail, three pumping grooves 12, 13, and 14 serving as fluid recovery grooves and provided to overlap each other when viewed in the radial direction. One set of the dynamic pressure generation mechanism D1 is composed of four dynamic pressure grooves 15 serving as dynamic pressure generation grooves and provided in a circumferential direction. In addition, a portion of the sliding surface 11 other than the pumping grooves 12, 13, and 14 and the dynamic pressure grooves 15 is a land 16 forming a flat surface.

As illustrated in FIG. 3, the pumping groove 12 is a groove having a substantially L-shape with an obtuse interior angle and a substantially constant depth, and including a circumferential groove 27 serving as a first groove portion and an inclined groove 28 serving as a second groove portion. Incidentally, the cross-sectional shape of the pumping groove 12 is a rectangular shape, but may be a U-shape, a semicircular shape, or a triangular shape, and may be changed as appropriate. The same applies to the dynamic pressure grooves 15.

In more detail, the circumferential groove 27 extends in an arc shape in the circumferential direction while being inclined to the radial inner side from an upstream side in a rotation direction of the rotating seal ring 20 toward a downstream side in the rotation direction, namely, from the upstream side toward the downstream side in the relative rotation direction. The circumferential groove 27 has a circumferential component larger than a radial component.

Incidentally, it is preferable that the circumferential groove 27 has at least a circumferential component. Namely, in the present invention, it is preferable that the circumferential direction includes at least a circumferential component.

In addition, the circumferential groove 27 has a groove width that gradually increases as the circumferential groove 27 extends from the upstream side in the rotation direction of the rotating seal ring 20 toward the downstream side in the rotation direction. An end portion 27a of the circumferential groove 27 on the upstream side in the rotation direction of the rotating seal ring 20 is closed. An end portion of the circumferential groove 27 on the downstream side in the rotation direction of the rotating seal ring 20 communicates with the inclined groove 28.

The inclined groove 28 extends substantially linearly from the end portion of the circumferential groove 27 on the downstream side in the rotation direction of the rotating seal ring 20 toward the radial inner side while being inclined to the downstream side in the rotation direction of the rotating seal ring 20. In other words, the inclined groove 28 is inclined in a direction opposite to the dynamic pressure grooves 15. The inclined groove 28 has a radial component larger than a circumferential component. Namely, the inclined groove 28 has a smaller circumferential component and a larger radial component than the circumferential groove 27.

Incidentally, it is preferable that the inclined groove 28 has at least a radial component. Namely, in the present invention, it is preferable that the radial direction includes at least a radial component.

The inclined groove 28 is bent from the circumferential groove 27 at an obtuse angle, and extends toward the inner space S1. In addition, a radial inner end 28a of the inclined groove 28 communicates with the inner space S1. A bent portion 25 having a bent shape and serving as a pressure generation portion is formed at a connecting portion between the circumferential groove 27 and the inclined groove 28. In other words, the bent portion 25 is a portion where the curvature of the pumping groove 12 changes, and is a bent portion of the pumping groove 12 on the downstream side in the relative rotation direction.

The pumping groove 13 is formed on the radial outer side and the downstream side in the rotation direction of the rotating seal ring 20 with respect to the pumping groove 12. The pumping groove 13 includes a circumferential groove 37 serving as a first groove portion and an inclined groove 38 serving as a second groove portion. A radial inner end 38a of the inclined groove 38 is closed. The radial inner end 38a is a circumferential end portion of the pumping groove 13 on the downstream side in the relative rotation direction.

A bent portion 35 serving as a pressure generation portion is formed at a connecting portion between the circumferential groove 37 and the inclined groove 38. The bent portion 35 is formed on the downstream side in the rotation direction of the rotating seal ring 20 and slightly on the radial outer side with respect to the bent portion 25 of the pumping groove 12. Namely, the dimension of a separation between the bent portion 35 and the bent portion 25 in the circumferential direction is longer than the dimension of a separation therebetween in the radial direction. Since the other configurations have substantially the same shapes as those of the pumping groove 12, duplicated description will be omitted.

The pumping groove 14 is formed on the radial outer side and the downstream side in the rotation direction of the rotating seal ring 20 with respect to the pumping groove 13. The pumping groove 14 includes a circumferential groove 47 serving as a first groove portion and an inclined groove 48 serving as a second groove portion. A radial inner end 48a of the inclined groove 48 is closed. The radial inner end 48a is a circumferential end portion of the pumping groove 14 on the downstream side in the relative rotation direction.

A bent portion 45 serving as a pressure generation portion is formed at a connecting portion between the circumferential groove 47 and the inclined groove 48. The bent portion 45 is formed on the downstream side in the rotation direction of the rotating seal ring 20 and slightly on the radial outer side with respect to the bent portion 35 of the pumping groove 13. Since the other configurations have substantially the same shapes as those of the pumping groove 12, duplicated description will be omitted.

The dynamic pressure generation mechanism D1 is formed on the radial inner side defined by the pumping groove 12, namely, in a region 11b on a sealed fluid F side. In addition, the depth of the four dynamic pressure grooves 15 constituting the dynamic pressure generation mechanism D1 is substantially constant. Further, among the four dynamic pressure grooves 15, the farther the dynamic pressure groove 15 is located on the upstream side in the rotation direction of the rotating seal ring 20 with respect to an inclined groove 28 side of the pumping groove 12, the longer the dimension from a radial inner end 15a to a radial outer end 15b becomes.

In more detail, each of the dynamic pressure grooves 15 extends linearly from the radial inner end 15a to the radial outer end 15b toward the downstream side in the rotation direction of the rotating seal ring 20. The radial inner end 15a of the dynamic pressure groove 15 communicates with the inner space S1, and the radial outer end 15b serving as a dynamic pressure generation portion is closed. Incidentally, the dynamic pressure groove 15 is not limited to having a linear shape, and may have an arc shape when viewed in the axial direction.

Next, the operation of the stationary seal ring 10 and the rotating seal ring 20 during relative rotation will be described with reference to FIG. 3. Incidentally, in the present specification, in FIG. 3 and other figures, the flow of the sealed fluid during relative rotation under certain conditions is schematically illustrated by solid thin arrows and hollow arrows.

When the rotating seal ring 20 rotates, as illustrated by the solid thin arrows in FIG. 3, the sealed fluid F in each of the dynamic pressure grooves 15 attempts to move in accordance with the rotation direction of the rotating seal ring 20 due to shear with the sliding surface 21. At that time, the sealed fluid F is guided along the dynamic pressure groove 15, flows into a gap between the sliding surfaces 11 and 21 from the radial outer end 15b and the vicinity thereof, so that positive pressure is generated.

In addition, when the rotating seal ring 20 rotates, as illustrated by the hollow arrows in FIG. 3, the sealed fluid F in the circumferential groove 27 of the pumping groove 12 moves in accordance with the rotation direction of the rotating seal ring 20 due to shear with the sliding surface 21, is guided along the circumferential groove 27 toward the inclined groove 28 side, is guided along the inclined groove 28, and is discharged from the radial inner end 28a into the inner space S1.

In addition, when the sealed fluid F flows into the inclined groove 28 from the circumferential groove 27, the flow direction of the sealed fluid F is rapidly changed toward the radial inner side with respect to a flow direction up to that point by the bent portion 25. At this time, a part of the sealed fluid F fails to keep up with the change in the flow direction, flows into the gap between the sliding surfaces 11 and 21 from the bent portion 25 and the vicinity thereof, so that positive pressure is generated.

Meanwhile, a relative negative pressure is generated in the pumping groove 12. The closer the location is to an end portion 27a side of the circumferential groove 27, the larger the negative pressure becomes. Namely, the force that suctions the sealed fluid F becomes stronger.

In addition, the circumferential groove 27 is disposed on an outer space S2 side, namely, on a leakage side with respect to the radial outer end 15b and the vicinity thereof where positive pressure is generated in each of the dynamic pressure grooves 15. In addition, the circumferential groove 27 extends in the circumferential direction to block the movement of the sealed fluid F, which has flowed into the gap between the sliding surfaces 11 and 21 from each of the dynamic pressure grooves 15, toward the outer space S2 side. In other words, the locations where positive pressure is generated in the circumferential groove 27 and each of the dynamic pressure grooves 15 are formed at positions overlapping each other when viewed in the radial direction. In such a manner, being disposed at positions overlapping each other when viewed in the radial direction is referred to as overlapping in the radial direction in the present invention. Similarly, being disposed at positions overlapping each other when viewed in the circumferential direction is referred to as overlapping in the circumferential direction in the present invention.

As a result, most of the sealed fluid F that has flowed into the gap between the sliding surfaces 11 and 21 from each of the dynamic pressure grooves 15 is recovered by the circumferential groove 27.

In addition, a part of the sealed fluid F moves in accordance with the rotation direction of the rotating seal ring 20 due to shear with the sliding surface 21, and is discharged into the inner space S1 together with the sealed fluid F guided along the inclined groove 28.

In addition, when the rotating seal ring 20 rotates, as illustrated by the hollow arrows in FIG. 3, the sealed fluid F in the circumferential groove 37 of the pumping groove 13 moves in accordance with the rotation direction of the rotating seal ring 20 due to shear with the sliding surface 21, is guided along the circumferential groove 37 toward an inclined groove 38 side, is guided along the inclined groove 38 toward a radial inner end 38a side, and flows into the gap between the sliding surfaces 11 and 21 from the radial inner end 38a and the vicinity thereof, so that positive pressure is generated. In such a manner, the radial inner end 38a functions as another pressure generation portion of the pumping groove 13.

In addition, similarly to the pumping groove 12, a part of the sealed fluid F flows into the gap between the sliding surfaces 11 and 21 from the bent portion 35 and the vicinity thereof, so that positive pressure is generated.

Meanwhile, a relative negative pressure is generated in the pumping groove 13. The closer the location is to an end portion 37a of the circumferential groove 37, the larger the negative pressure becomes. The sealed fluid F that has passed across the pumping groove 12, the sealed fluid F that has flowed into the gap between the sliding surfaces 11 and 21 from the bent portion 25 of the pumping groove 12, and the like are recovered by the pumping groove 13 overlapping the pumping groove 12 in the radial direction and the circumferential direction.

Similarly to the sealed fluid F in the pumping groove 13, the sealed fluid F in the pumping groove 14 flows into the gap between the sliding surfaces 11 and 21 from the radial inner end 48a of the pumping groove 14 and the vicinity thereof, so that positive pressure is generated. In such a manner, the radial inner end 48a functions as another pressure generation portion of the pumping groove 14.

In addition, similarly to the pumping grooves 12 and 13, a part of the sealed fluid F flows into the gap between the sliding surfaces 11 and 21 from the bent portion 45 and the vicinity thereof, so that positive pressure is generated.

In addition, a relative negative pressure is generated in the pumping groove 14. The closer the location is to an end portion 47a of the circumferential groove 47, the larger the negative pressure becomes. The sealed fluid F that has passed across the pumping groove 13, the sealed fluid F that has flowed into the gap between the sliding surfaces 11 and 21 from the bent portion 35 or the radial inner end 38a of the pumping groove 13, and the like are recovered by the pumping groove 14 overlapping the pumping groove 13 in the radial direction and the circumferential direction.

In addition, the end portion 27a of the circumferential groove 27 of the pumping groove 12 of one set of the fluid recovery mechanism R1 is disposed on the outer space S2 side with respect to the bent portion 45 and the radial inner end 48a of the pumping groove 14 of the adjacent fluid recovery mechanism R1 on the upstream side in the rotation direction of the rotating seal ring 20, and overlaps the bent portion 45 and the radial inner end 48a in the radial direction. Therefore, the sealed fluid F that has flowed into the gap between the sliding surfaces 11 and 21 from the bent portion 45 of the pumping groove 14 on the upstream side and the vicinity of the bent portion 45 is also recovered in the pumping groove 12 located on the downstream side in the rotation direction.

As described above, the stationary seal ring 10 of the present embodiment can recover the sealed fluid F, which flows out from each of the dynamic pressure grooves 15 constituting the dynamic pressure generation mechanism D1, using the three pumping grooves 12, 13, and 14 constituting the fluid recovery mechanism R1. As a result, leakage can be reduced and lubrication can be enhanced.

In addition, the stationary seal ring 10 can generate positive pressure not only in each of the dynamic pressure grooves 15 but also at the bent portions 25, 35, and 45 of the three pumping grooves 12, 13, and 14 that are formed. As a result, the stationary seal ring 10 can improve the floating balance with the rotating seal ring 20 by generating positive pressure at a plurality of locations, so that lubrication is enhanced.

In addition, each of the bent portions 25, 35, and 45 of one set of the fluid recovery mechanism R1 is located between the dynamic pressure grooves 15, which constitute two sets of the adjacent dynamic pressure generation mechanisms D1, in the circumferential direction and on the radial outer side with respect to each of the dynamic pressure grooves 15. As a result, the stationary seal ring 10 can generate positive pressure between the sliding surfaces 11 and 21 in a well-balanced manner.

Further, since the bent portions 25, 35, and 45 of one set of the fluid recovery mechanism R1 are formed at positions offset from each other in the circumferential direction and the radial direction, the floating balance with the rotating seal ring 20 can be further improved.

In addition, since the pumping groove 12 overlaps each of the dynamic pressure grooves 15 constituting one set of the dynamic pressure generation mechanism D1 in the radial direction and the circumferential direction, the sealed fluid F flowing from the dynamic pressure grooves 15 toward the outer space S2 side is easily recovered in the pumping groove 12.

In addition, since each of the pumping grooves 12, 13, and 14 constituting one set of the fluid recovery mechanism R1 overlaps each of the dynamic pressure grooves 15 constituting one set of the dynamic pressure generation mechanism D1 in the radial direction, the sealed fluid F can be recovered more reliably.

In addition, the pumping grooves 12, 13, and 14 can generate positive pressure at least at the bent portions 25, 35, and 45. Therefore, the stationary seal ring 10 can generate a larger dynamic pressure, and guide the sealed fluid F in the pumping grooves 12, 13, and 14 toward the inner space S1.

In addition, the pumping grooves 12, 13, and 14 can recover the sealed fluid F, which flows out from the dynamic pressure grooves 15 and which attempts to flow to the outer space S2 side, using the circumferential grooves 27, 37, and 47 of the pumping grooves 12, 13, and 14. Further, the pumping grooves 12, 13, and 14 recover the sealed fluid F recovered by the circumferential grooves 27, 37, and 47 and the excess sealed fluid F between the sliding surfaces 11 and 21, which may lead to leakage, using the inclined grooves 28, 38, and 48 of the pumping grooves 12, 13, and 14 located downstream side, and return the recovered sealed fluid F and the excess sealed fluid F to an inner space S1 side. Accordingly, leakage is suppressed, and the prevention of leakage is performed more reliably.

In addition, the pumping grooves 13 and 14 can also generate positive pressure at the radial inner ends 38a and 48a. As a result, the stationary seal ring 10 can generate positive pressure at more positions and a plurality of locations.

Further, since the radial inner ends 38a and 48a of the pumping grooves 13 and 14 are formed at positions offset from each other in the circumferential direction and the radial direction, the floating balance with the rotating seal ring 20 can be further improved.

In more detail, the radial inner ends 38a and 48a of the pumping grooves 13 and 14 are formed at substantially the same radial position as the radial outer end 15b of each of the dynamic pressure grooves 15. Accordingly, positive pressure can be generated in a region that is substantially the same as the radial outer end 15b of each of the dynamic pressure grooves 15 and the vicinity of the radial outer end 15b.

In addition, a positive pressure higher than the positive pressure generated at the bent portions 35 and 45 of the pumping grooves 13 and 14 and in the vicinities of the bent portions 35 and 45 is generated at the radial inner ends 38a and 48a of the pumping grooves 13 and 14, which are closed end portions, and in the vicinities of the radial inner ends 38a and 48a.

Accordingly, the radial inner ends 38a and 48a of the pumping grooves 13 and 14 can generate a positive pressure, which is relatively higher than the positive pressure generated at the bent portions 35 and 45 of the pumping grooves 13 and 14, in a region that is substantially the same as the radial outer end 15b of each of the dynamic pressure grooves 15 and the vicinity of the radial outer end 15b. Therefore, the floating balance with the rotating seal ring 20 can be improved more effectively.

In addition, in one set of the fluid recovery mechanisms R1, the end portions 27a, 37a, and 47a of the pumping grooves 12, 13, and 14 are formed at positions offset from each other in the circumferential direction. In other words, the highest relative negative pressure in each of the pumping grooves 12, 13, and 14 is distributed at different positions in the circumferential direction. Therefore, the stationary seal ring 10 easily maintains the floating balance.

In addition, in one set of the fluid recovery mechanisms R1, the end portions 27a, 37a, and 47a of the pumping grooves 12, 13, and 14 are formed at positions offset from each other in the radial direction. In other words, the highest relative negative pressure in each of the pumping grooves 12, 13, and 14 is distributed at different positions in the circumferential direction. Therefore, the stationary seal ring 10 easily maintains the floating balance.

In addition, in the four dynamic pressure grooves 15 constituting one set of the dynamic pressure generation mechanism D1, the radial positions of the radial outer ends 15b are different. In more detail, the radial outer ends 15b of the four dynamic pressure grooves 15 are gradually located from the radial outer side to the radial inner side from the upstream side toward the downstream side in the relative rotation direction. Accordingly, dynamic pressure can be generated at different positions in the radial direction. As a result, the stationary seal ring 10 can further improve the floating balance with the rotating seal ring 20.

In addition, the width of the circumferential grooves 27, 37, and 47 is increased as the circumferential grooves 27, 37, and 47 extend from the upstream side toward the downstream side in the rotation direction of the rotating seal ring 20. Accordingly, the pumping grooves 12, 13, and 14 easily generate relative negative pressure in the circumferential grooves 27, 37, and 47.

In addition, the circumferential grooves 27, 37, and 47 have closed ends on the upstream side in the rotation direction of the rotating seal ring 20, and are disposed on the outer space S2 side, namely, on the leakage side. As described above, the closer the location is to the upstream side in the rotation direction of the rotating seal ring 20, the larger the relative negative pressure generated in the circumferential grooves 27, 37, and 47 becomes. Therefore, the circumferential grooves 27, 37, and 47 of one set of the fluid recovery mechanism R1 can efficiently recover the sealed fluid F that has moved further toward the outer space S2 side from the pumping grooves 12, 13, and 14 constituting the fluid recovery mechanism R1 located on the upstream side in the rotation direction of the rotating seal ring 20.

In addition, in one set of the fluid recovery mechanism R1, since the pumping groove 12 communicates with the inner space S1, the pumping groove 12 allows the sealed fluid F to more easily move than the pumping grooves 13 and 14 that do not communicate with the inner space S1, and enhances the fluid recovery function.

Further, in one set of the fluid recovery mechanism R1, since the pumping groove 12 is disposed at a position closest to each of the dynamic pressure grooves 15 constituting one set of the dynamic pressure generation mechanism D1, compared to the other pumping grooves 13 and 14, the pumping groove 12 can recover the sealed fluid F that has flowed into the gap between the sliding surfaces 11 and 21, before the sealed fluid F diffuses over a wider range.

Accordingly, the stationary seal ring 10 has a high efficiency in recovering the sealed fluid F that has flowed out from each of the dynamic pressure grooves 15.

In addition, since the sealed fluid F recovered by the pumping grooves 12 can be discharged into the inner space S1 from a plurality of locations in the circumferential direction, not only can the stagnation of the deteriorated sealed fluid F between the sliding surfaces 11 and 21 be suppressed, but the accumulation of contamination or the like can also be prevented.

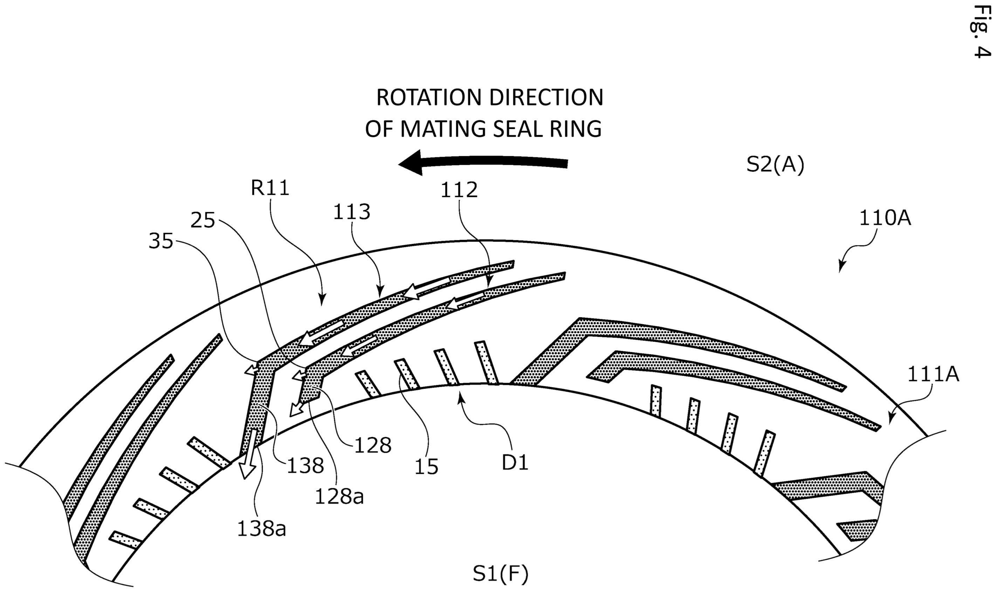

Incidentally, in the present embodiment, the configuration in which the radial inner end 28a of the inclined groove 28 of the pumping groove 12 communicates with the inner space S1 has been described; however, the present invention is not limited thereto, and referring to FIG. 4 illustrating a modification example, as in a pumping groove 112 of a fluid recovery mechanism R11 of a stationary seal ring 110A, a radial inner end 128a of an inclined groove 128 may be closed. The radial inner end 128a is a circumferential end portion of the pumping groove 112 on the downstream side in the relative rotation direction.

In addition, the configuration in which the radial inner end 38a of the inclined groove 38 of the pumping groove 13 is closed has been described; however, the present invention is not limited thereto, and referring to FIG. 4 illustrating a modification example, as in a pumping groove 113 of the fluid recovery mechanism R11 of the stationary seal ring 110A, a radial inner end 138a of an inclined groove 138 may communicate with the inner space S1.

In such a configuration, the sealed fluid F flows into a gap between sliding surfaces 111A and 21 from the radial inner end 128a of the inclined groove 128, so that positive pressure can be generated at the radial inner end 128a and in the vicinity thereof. In such a manner, the radial inner end 128a of the inclined groove 128 functions as another pressure generation portion of the pumping groove 112.

In addition, in FIG. 4, the radial inner end 128a is located between two sets of the adjacent dynamic pressure grooves 15 in the circumferential direction and on the radial inner side with respect to the closed end of each of the dynamic pressure grooves 15. As a result, positive pressure can be generated between the sliding surfaces 111A and 21 in a well-balanced manner.

In addition, in FIG. 4, the pumping groove 112 can discharge a part of the sealed fluid F, which has flowed into the gap between the sliding surfaces 111A and 21 from the radial inner end 128a thereof, into the inner space S1.

In addition, in FIG. 4, the pumping groove 113 can discharge the sealed fluid F from the radial inner end 138a thereof into the inner space S1. In such a manner, the pumping groove may or may not communicate with the sealed fluid space regardless of the position where the pumping groove is formed. In addition, all of the plurality of pumping grooves may or may not communicate with the sealed fluid space.

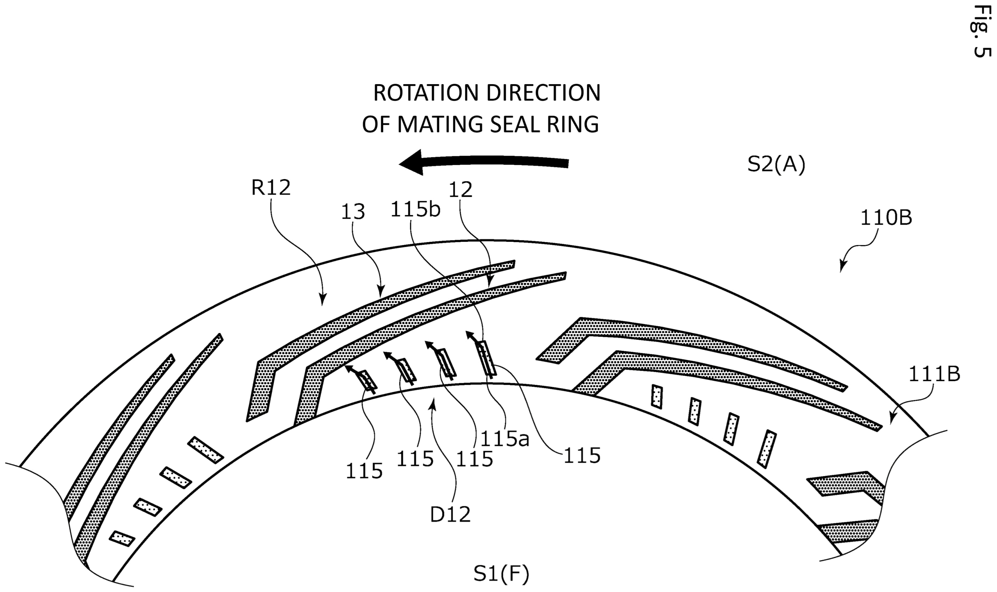

In addition, in the present embodiment, the configuration in which the radial inner end 15a of each of the dynamic pressure grooves 15 communicates with the inner space S1 has been described; however, the present invention is not limited thereto, and referring to FIG. 5 illustrating another modification example, as in a dynamic pressure generation mechanism D12 of a sliding surface 111B of a stationary seal ring 110B, a radial inner end 115a of a dynamic pressure groove 115 may be closed.

In such a configuration as well, the sealed fluid F flowing into the dynamic pressure groove 115 moves from the radial inner end 115a to the radial outer end 15b, so that dynamic pressure can be generated at the radial outer end 15b and in the vicinity thereof. In addition, the sealed fluid F can be introduced from the inner space S1 by the negative pressure generated at the radial inner end 115a of the dynamic pressure groove 115.

In addition, referring to FIGS. 4 and 5, as in the fluid recovery mechanisms R11 and R12, it is preferable that two or more fluid recovery grooves are formed on the leakage space side with respect to the dynamic pressure generation grooves in the radial direction, and the number of the fluid recovery grooves may be changed as appropriate.

In addition, in the present embodiment, a mode in which the four dynamic pressure grooves 15 provided in the circumferential direction are configured as dynamic pressure generation grooves has been provided as an example; however, the present invention is not limited thereto, and the dynamic pressure generation grooves may be, for example, bent grooves, Rayleigh steps, spiral grooves, or grooves or dimples having various shapes such as a herringbone shape as long as the dynamic pressure generation grooves can generate positive pressure, it is preferable that the number of the dynamic pressure generation grooves is one or more, and the configuration of the dynamic pressure generation grooves may be changed as appropriate.

### {Second embodiment}

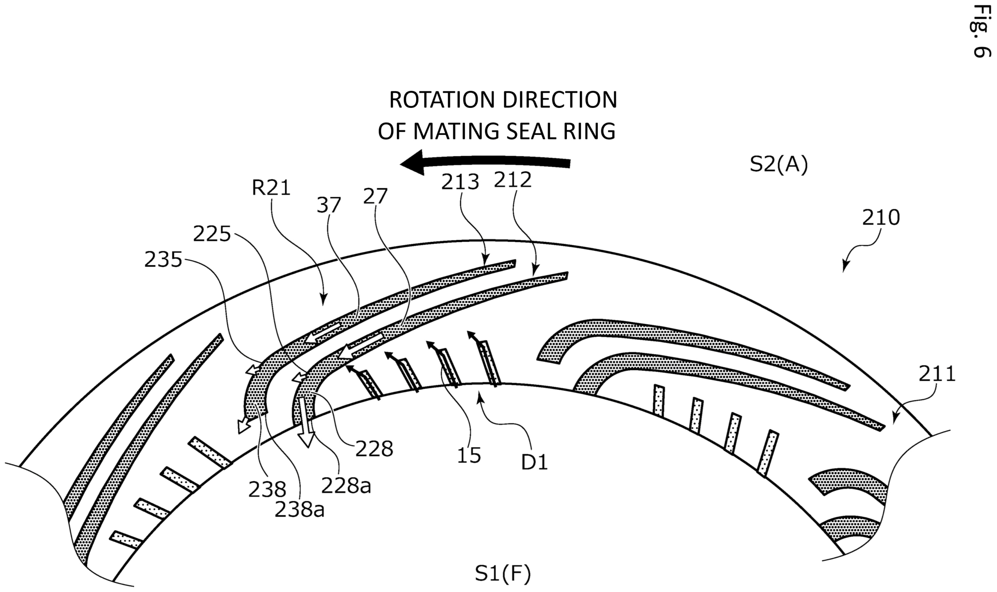

Next, sliding components according to a second embodiment of the present invention will be described with reference to FIG. 6. Incidentally, the description of configurations that are the same as and overlap with the configurations of the first embodiment will be omitted.

A sliding surface 211 of a stationary seal ring 210 as one of sliding components according to the second embodiment is provided with a plurality of fluid recovery mechanisms R21 and a plurality of the dynamic pressure generation mechanisms D1. One set of the fluid recovery mechanism R21 is composed of two pumping grooves 212 and 213 arranged in the radial direction.

The pumping groove 212 includes the circumferential groove 27 and a curved inclined groove 228.

The curved inclined groove 228 extends in an arc shape with a small curvature from a downstream end portion of the circumferential groove 27 in the rotation direction of the rotating seal ring 20 toward the inner space S1 so as to be convex toward the radial outer side. Accordingly, a bent portion 225 of the curved inclined groove 228 is formed more gently than the bent portion 25 of the first embodiment. Namely, the bent portion 225 has a curved shape. In other words, the bent portion 225 is a portion where the curvature of the pumping groove 212 changes, and is a curved portion of the pumping groove 212 on the downstream side in the relative rotation direction.

Similarly, the pumping groove 213 includes the circumferential groove 37 and a curved inclined groove 238. In addition, a bent portion 235 of the curved inclined groove 238 is formed more gently than the bent portion 35 of the first embodiment.

According to this configuration, the pumping groove 212 of the present embodiment further suppresses the generation of positive pressure at the bent portion 225, and more easily discharges the recovered fluid from a radial inner end 228a into the inner space S1, compared to the pumping groove 12 of the first embodiment.

In addition, the pumping groove 213 of the present embodiment further suppresses the generation of positive pressure at the bent portion 235, compared to the pumping groove 13 of the first embodiment.

Accordingly, a larger amount of the fluid than the amount of the fluid flowing into the gap between the sliding surfaces 11 and 21 from the radial inner end 38a and the vicinity thereof in the first embodiment is allowed to flow into a gap between the sliding surfaces 211 and 21 from a radial inner end 238a and the vicinity thereof. Namely, the positive pressure generated at the radial inner end 238a and in the vicinity thereof is higher than the positive pressure generated at the radial inner end 38a and in the vicinity thereof in the first embodiment.

### {Third embodiment}

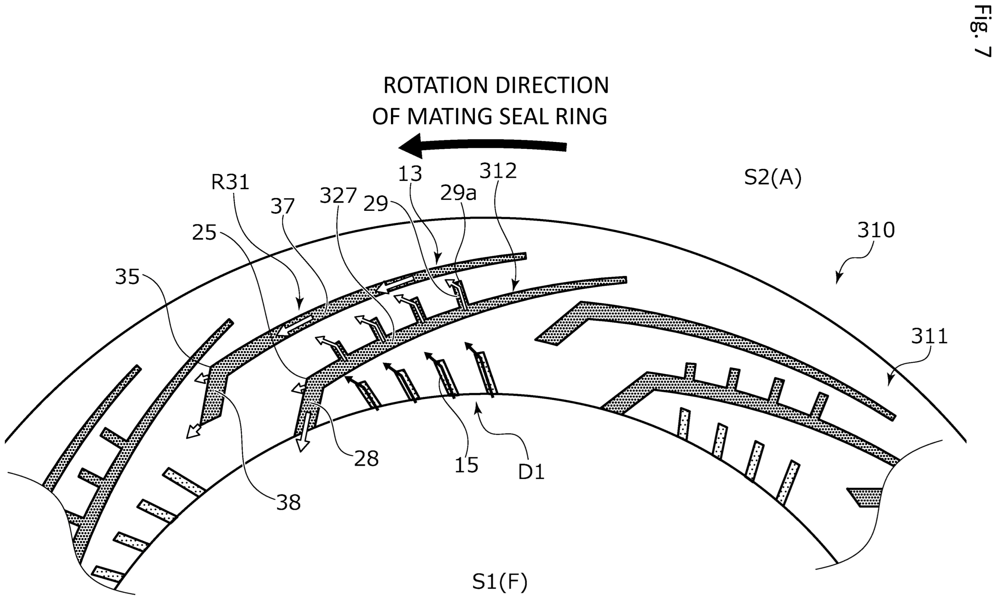

Next, sliding components according to a third embodiment of the present invention will be described with reference to FIG. 7. Incidentally, the description of configurations that are the same as and overlap with the configurations of the first embodiment will be omitted.

A sliding surface 311 of a stationary seal ring 310 as one of the sliding components according to the third embodiment is provided with a plurality of fluid recovery mechanisms R31 and a plurality of the dynamic pressure generation mechanisms D1. One set of the fluid recovery mechanism R31 is composed of two pumping grooves 312 and 13 arranged in the radial direction.

The pumping groove 312 includes a circumferential groove 327, the inclined groove 28, and four dynamic pressure grooves 29 serving as another dynamic pressure generation groove.

The dynamic pressure grooves 29 communicate with the circumferential groove 327, and extend substantially linearly from the circumferential groove 327 toward the leakage side while being inclined in the circumferential direction toward the downstream side in the relative rotation direction. In addition, radial outer ends 29a of the dynamic pressure grooves 29 are closed. In addition, the depth of the dynamic pressure grooves 29 is substantially constant, and is substantially the same as the depth of each of the circumferential groove 327 and the inclined groove 28.

Further, among the four dynamic pressure grooves 29, the farther the dynamic pressure groove 29 is located on the upstream side in the rotation direction of the rotating seal ring 20 with respect to the inclined groove 28 side of the pumping groove 312, the longer the dimension from the circumferential groove 327 to the radial outer end 29a of the dynamic pressure groove 29 becomes.

When the rotating seal ring 20 rotates, as illustrated by hollow arrows in FIG. 7, the sealed fluid F in each of the dynamic pressure grooves 29 moves in accordance with the rotation direction of the rotating seal ring 20 due to shear with the sliding surface 21, is guided along the dynamic pressure groove 29 toward the radial outer end 29a, and flows into a gap between the sliding surfaces 311 and 21 from the radial outer end 29a and the vicinity thereof, so that positive pressure is generated. In such a manner, the radial outer end 29a of each of the dynamic pressure grooves 29 functions as another pressure generation portion of the pumping groove 312. Therefore, the pumping groove 312 can generate positive pressure at more positions.

In addition, the sealed fluid F flows into each of the dynamic pressure grooves 29 from the circumferential groove 327. Namely, positive pressure can be generated using the sealed fluid F recovered in the circumferential groove 327.

In addition, the sealed fluid F that has flowed into the gap between the sliding surfaces 311 and 21 from each of the dynamic pressure grooves 29 is recovered by the pumping groove 13 overlapping each of the dynamic pressure grooves 29 in the radial direction and the circumferential direction.

Incidentally, as a modification example of the third embodiment, the dynamic pressure grooves 29 may be formed in the pumping groove 13 as long as the pumping groove 14 similar to that of the first embodiment is further provided in the configuration illustrated in FIG. 7. Namely, among a plurality of the fluid recovery grooves constituting the fluid recovery mechanism, the fluid recovery grooves other than the fluid recovery groove disposed on the radial outermost side may be provided with the dynamic pressure generation portions.

In addition, another dynamic pressure generation groove is not limited to being configured to communicate with the fluid recovery groove, and may not communicate therewith. Furthermore, another dynamic pressure generation groove may be a groove or dimple having various shapes and capable of generating positive pressure, and the shape or number thereof may be changed as appropriate.

### {Fourth embodiment}

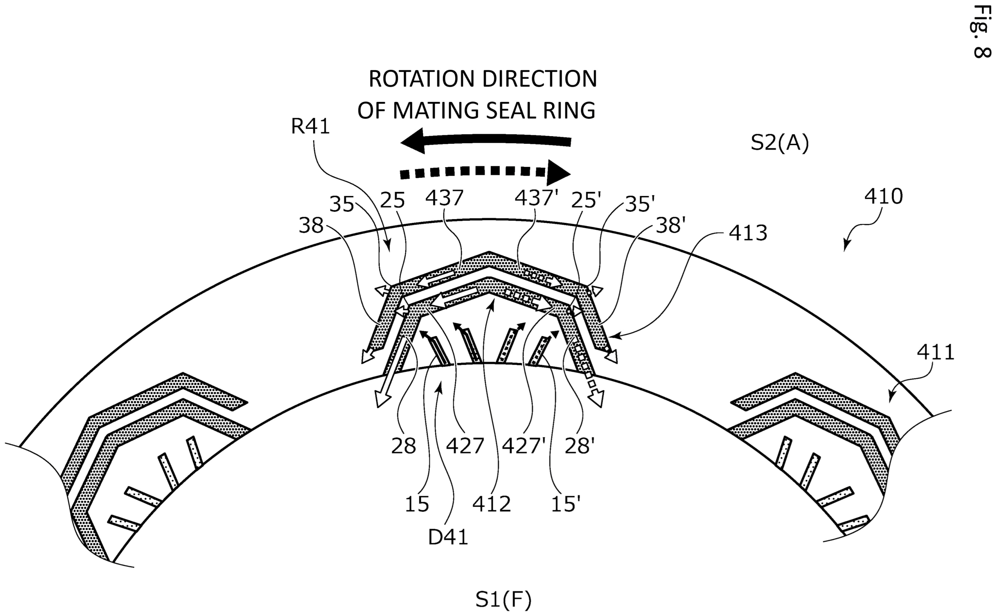

Next, sliding components according to a fourth embodiment of the present invention will be described with reference to FIG. 8. Incidentally, the description of configurations that are the same as and overlap with the configurations of the first embodiment will be omitted.

A sliding surface 411 of a stationary seal ring 410 as one of sliding components according to the fourth embodiment is provided with a plurality of fluid recovery mechanisms R41 and a plurality of dynamic pressure generation mechanisms D41. One set of the fluid recovery mechanism R41 is composed of two pumping grooves 412 and 413 arranged in the radial direction. One set of the dynamic pressure generation mechanism D41 is composed of two dynamic pressure grooves 15 and two reverse dynamic pressure grooves 15'.

The pumping groove 412 includes a circumferential groove 427, the inclined groove 28, a reverse circumferential groove 427', and a reverse inclined groove 28'.

The two reverse dynamic pressure grooves 15' overlapping one pumping groove 412 in the radial direction and the circumferential direction, the reverse circumferential groove 427', and the reverse inclined groove 28' have a shape obtained by inverting the two dynamic pressure grooves 15, the circumferential groove 427, and the inclined groove 28 in the circumferential direction with an upstream end of the circumferential groove 427 in the rotation direction of the rotating seal ring 20 as a boundary. In addition, the upstream end of the circumferential groove 427 in the rotation direction of the rotating seal ring 20 and a downstream end of the reverse circumferential groove 427' in the rotation direction of the rotating seal ring 20 communicate with each other.

The pumping groove 413 includes a circumferential groove 437, the inclined groove 38, a reverse circumferential groove 437', and a reverse inclined groove 38'. The reverse circumferential groove 437' and the reverse inclined groove 38' have a shape obtained by inverting the circumferential groove 437 and the inclined groove 38 in the circumferential direction with an upstream end of the circumferential groove 437 in the rotation direction of the rotating seal ring 20 as a boundary. In addition, the upstream end of the circumferential groove 437 in the rotation direction of the rotating seal ring 20 and a downstream end of the reverse circumferential groove 437' in the rotation direction of the rotating seal ring 20 communicate with each other.

Accordingly, as illustrated by solid arrows, when the rotating seal ring 20 slides counterclockwise relative to the stationary seal ring, positive pressure is generated at the bent portions 25 and 35 and in the vicinities thereof and at the radial inner end of the inclined groove 38 and in the vicinity thereof. In addition, the sealed fluid F is discharged from the inclined groove 28 into the inner space S1.

Meanwhile, as illustrated by dashed arrows, when the rotating seal ring 20 slides clockwise relative to the stationary seal ring, positive pressure is generated at bent portions 25' and 35' and in the vicinities thereof and at a radial inner end of the reverse inclined groove 38' and in the vicinity thereof. In addition, the sealed fluid F is discharged from the reverse inclined groove 28' into the inner space S1.

In such a manner, by forming the dynamic pressure grooves and the fluid recovery grooves in a circumferentially symmetrical shape, positive pressure generation and fluid recovery can be achieved regardless of whether the rotation direction is one direction or the other direction. In addition, as long as positive pressure generation and fluid recovery can be achieved in both the one direction and the other direction of the rotation direction, the shapes of the dynamic pressure grooves or the fluid recovery grooves that achieve positive pressure generation or fluid recovery in the one direction of the rotation direction may be different from the shapes of the dynamic pressure grooves or the fluid recovery grooves that achieve positive pressure generation or fluid recovery in the other direction of the rotation direction. Namely, the shapes may not be symmetrical.

### {Fifth embodiment}

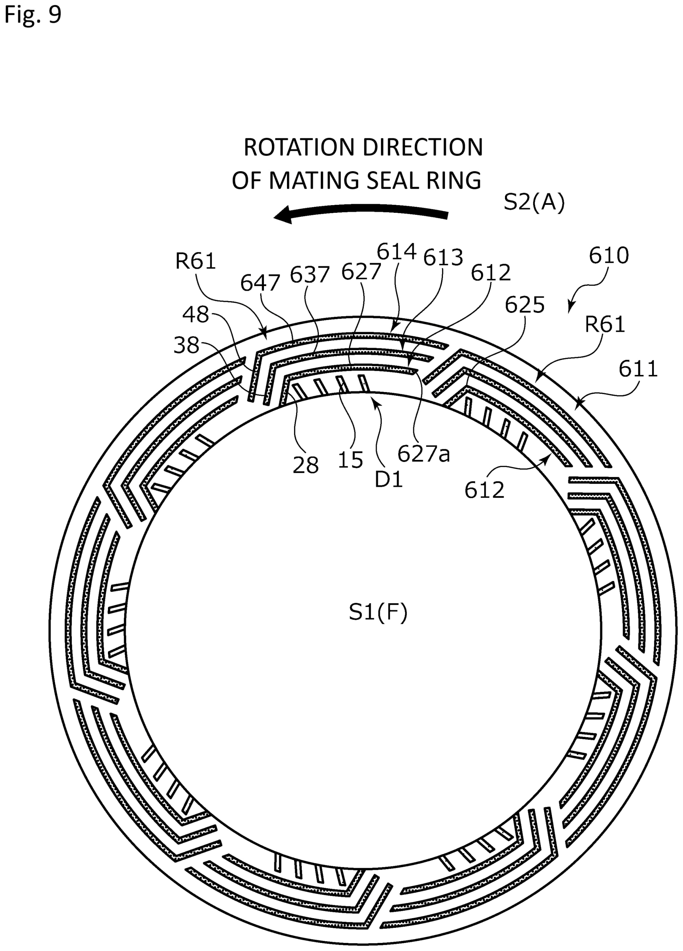

Next, sliding components according to a fifth embodiment of the present invention will be described with reference to FIG. 9. Incidentally, the description of configurations that are the same as and overlap with the configurations of the first embodiment will be omitted.

A sliding surface 611 of a stationary seal ring 610 as one of the sliding components according to the fifth embodiment is provided with a plurality of fluid recovery mechanisms R61 and a plurality of the dynamic pressure generation mechanisms D1. One set of the fluid recovery mechanism R61 is composed of three pumping grooves 612, 613, and 614 arranged in the radial direction.

Incidentally, in the fifth embodiment, since the shape of each of the pumping grooves 613 and 614 is substantially the same as that of the pumping groove 612, the pumping groove 612 will be described as an example, and the description of the pumping grooves 613 and 614 will be omitted.

Circumferential grooves 627 of the pumping grooves 612 are formed in an arc shape with the same curvature, and are disposed on the same circumference. In addition, the curvature of each of the circumferential grooves 627 is substantially the same as the curvature of the stationary seal ring 610. In addition, one circle is drawn by extending each of the circumferential grooves 627 in the circumferential direction.

In addition, an upstream end 627a of the circumferential groove 627 of one set of the fluid recovery mechanism R61 on the upstream side in the rotation direction of the rotating seal ring 20 overlaps, in the circumferential direction, a bent portion 625 of the pumping groove 612 of the adjacent fluid recovery mechanism R61 on the upstream side in the rotation direction of the rotating seal ring 20.

According to this configuration, the pumping groove 612 of one set of the fluid recovery mechanism R61 can efficiently recover the sealed fluid F that has flowed into a gap between the sliding surfaces 611 and 21 from the bent portion 625 of the pumping groove 612 of the adjacent fluid recovery mechanism R61 on the upstream side in the rotation direction of the rotating seal ring 20.

In addition, the circumferential groove 627 can guide the sealed fluid F along the rotation direction. In addition, the sealed fluid F that has flowed into the gap between the sliding surfaces 611 and 21 from the bent portion 625 of the adjacent pumping groove 612 on the upstream side in the rotation direction of the rotating seal ring 20 is also easily moved along the rotation direction. Accordingly, the stationary seal ring 610 can evenly recover the sealed fluid F.

Incidentally, in the present embodiment, the configuration in which one circle is drawn by extending each of the fluid recovery grooves in the circumferential direction has been described; however, the present invention is not limited thereto, and for example, the fluid recovery groove may have a shape extending linearly, or a configuration in which a polygonal shape is drawn by the circumferential overlap of the upstream end of the fluid recovery groove and the bent portion of the adjacent fluid recovery groove on the upstream side may be employed.

In such a configuration as well, the fluid recovery groove can efficiently recover the sealed fluid F that has flowed into the gap between the sliding surfaces from the bent portion of the adjacent fluid recovery groove on the upstream side in the relative rotation direction.

In addition, the circumferential groove 627 of the present embodiment has a constant width from the upstream side to the downstream side in the rotation direction of the rotating seal ring 20. In such a manner, the width of the fluid recovery groove is not limited to the configuration in which the width of the fluid recovery groove is increased as the fluid recovery groove extends from the upstream side toward the downstream side in the rotation direction of the rotating seal ring 20 as in the first embodiment, and the shape of the fluid recovery groove may be changed as appropriate.

### {Sixth embodiment}

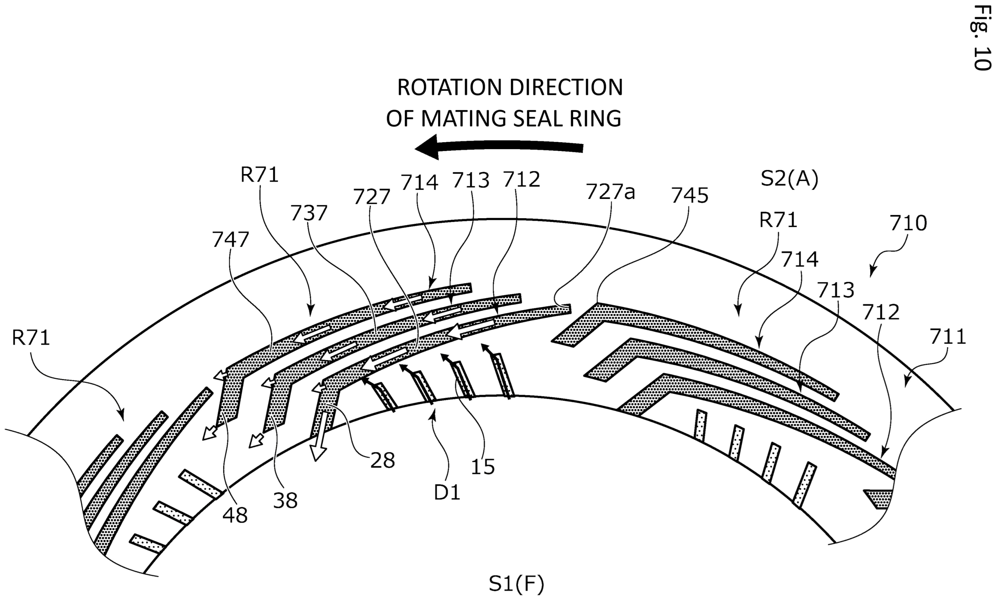

Next, sliding components according to a sixth embodiment of the present invention will be described with reference to FIG. 10. Incidentally, the description of configurations that are the same as and overlap with the configurations of the first embodiment will be omitted.

A sliding surface 711 of a stationary seal ring 710 as one of the sliding components according to the sixth embodiment is provided with a plurality of fluid recovery mechanisms R71 and a plurality of the dynamic pressure generation mechanisms D1. One set of the fluid recovery mechanism R71 is composed of three pumping grooves 712, 713, and 714 arranged in the radial direction.

An upstream end 727a of a circumferential groove 727 of the pumping groove 712 of one set of the fluid recovery mechanism R71 in the rotation direction of the rotating seal ring 20, the pumping groove 712 being located on the radial innermost side, overlaps, in the circumferential direction, a bent portion 745 of the pumping groove 714 of the adjacent fluid recovery mechanism R71 on the upstream side in the rotation direction of the rotating seal ring 20, the pumping groove 714 being located on the radial outermost side.

A circumferential groove 737 of each of the pumping grooves 713 is provided substantially parallel to the circumferential groove 727 of the pumping groove 712. The same applies to a circumferential groove 747 of each of the pumping grooves 714.

According to this configuration, the pumping groove 712 of one set of the fluid recovery mechanism R71 can efficiently recover the sealed fluid F that has flowed into a gap between the sliding surfaces 711 and 21 from the bent portion 745 of the pumping groove 714 of the adjacent fluid recovery mechanism R71 on the upstream side in the rotation direction of the rotating seal ring 20.

### {Seventh embodiment}

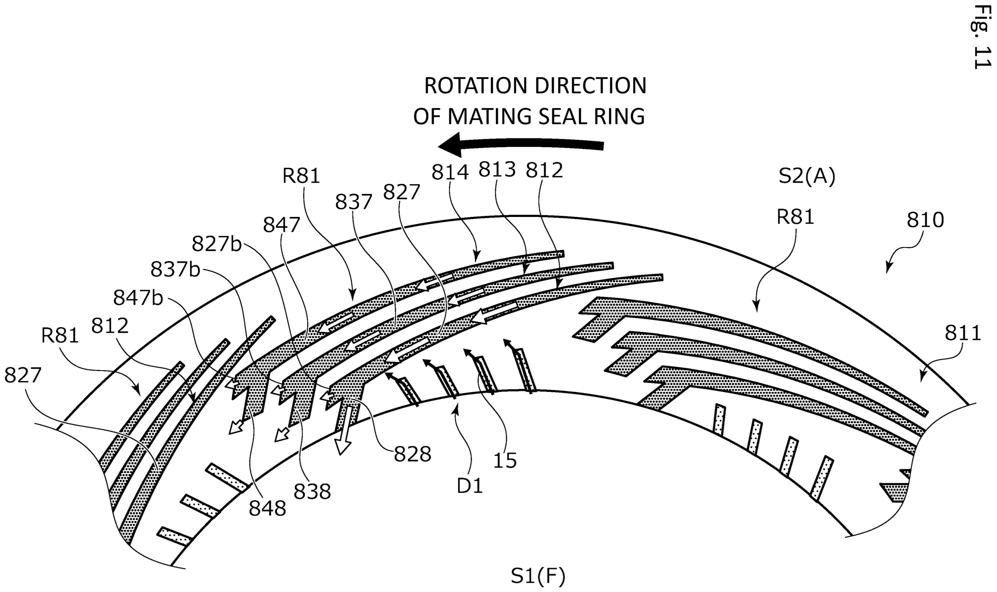

Next, sliding components according to a seventh embodiment of the present invention will be described with reference to FIG. 11. Incidentally, the description of configurations that are the same as and overlap with the configurations of the first embodiment will be omitted.

A sliding surface 811 of a stationary seal ring 810 as one of the sliding components according to the seventh embodiment is provided with a plurality of fluid recovery mechanisms R81 and a plurality of the dynamic pressure generation mechanisms D1. One set of the fluid recovery mechanism R81 is composed of three pumping grooves 812, 813, and 814 arranged in the radial direction.

Incidentally, in the seventh embodiment, since the shape of each of the pumping grooves 813 and 814 is substantially the same as that of the pumping groove 812, the pumping groove 812 will be described as an example, and the description of the pumping grooves 813 and 814 will be omitted.

The pumping groove 812 communicates with an inclined groove 828 at a position away to the upstream side from an end portion 827b of a circumferential groove 827, the end portion 827b serving as a pressure generation portion and located on the downstream side in the relative rotation of the rotating seal ring 20. The end portion 827b is a circumferential end portion of the pumping groove 812 on the downstream side in the relative rotation direction.

According to this configuration, positive pressure can be generated at the end portion 827b of the circumferential groove 827 and in the vicinity thereof.

In addition, another part of the fluid that has flowed into a gap between the sliding surfaces from the end portion 827b of one set of the fluid recovery mechanism R81 is recovered by an inclined groove 838 of the pumping groove 813 of the same fluid recovery mechanism R81.

In addition, positive pressure can be generated at an end portion 837b of a circumferential groove 837 of the pumping groove 813 and in the vicinity of the end portion 837b. In addition, another part of the fluid that has flowed into the gap between the sliding surfaces from the end portion 837b is recovered by an inclined groove 848 of the pumping groove 814 of the same fluid recovery mechanism R81.

In addition, positive pressure can be generated at an end portion 847b of a circumferential groove 847 of the pumping groove 814 and in the vicinity of the end portion 847b. In addition, another part of the fluid that has flowed into the gap between the sliding surfaces from the end portion 847b is recovered by the circumferential groove 827 of the pumping groove 812 of the adjacent fluid recovery mechanism R81 on the downstream side in the rotation direction of the rotating seal ring 20.

### {Eighth embodiment}

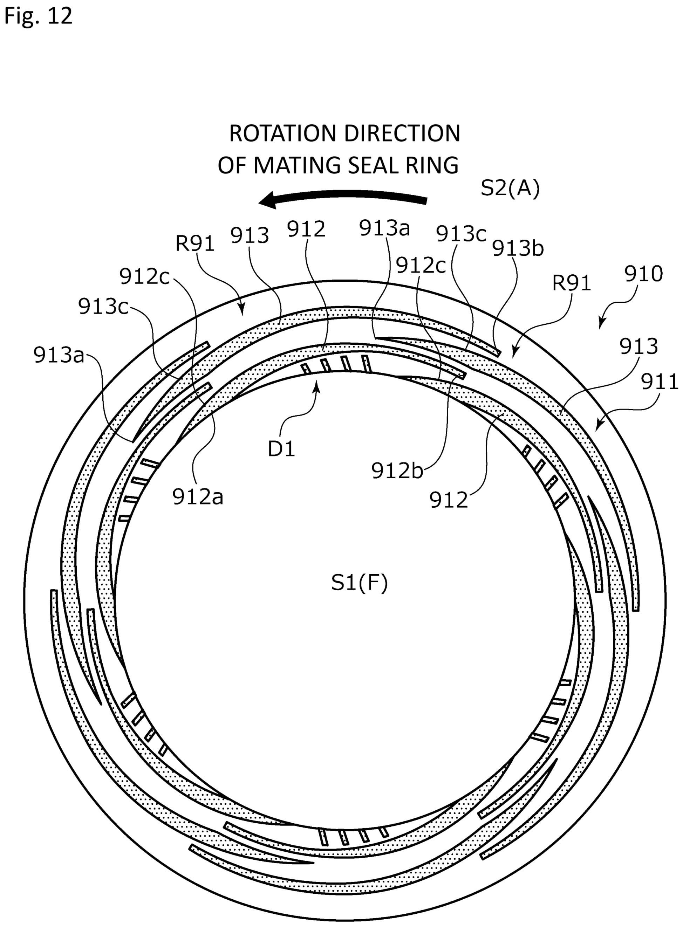

Next, sliding components according to an eighth embodiment of the sliding components will be described with reference to FIG. 12. Incidentally, the description of configurations that are the same as and overlap with the configurations of the first embodiment will be omitted.

A sliding surface 911 of a stationary seal ring 910 as one of the sliding components according to the eighth embodiment is provided with a plurality of fluid recovery mechanisms R91 and a plurality of the dynamic pressure generation mechanisms D1. One set of the fluid recovery mechanism R91 is composed of two pumping grooves 912 and 913 arranged in the radial direction.

The pumping groove 912 is formed in an arc shape that is convex toward the radial outer side, and that has a substantially constant curvature smaller than the curvature of the bent portion 225 of the second embodiment. An end portion 912a of the pumping groove 912 on the downstream side in the rotation direction of the rotating seal ring 20 communicates with the inner space S1. An end portion 912b of the pumping groove 912 on the upstream side in the rotation direction of the rotating seal ring 20 is closed.

In addition, the pumping groove 912 includes a curved portion 912c on the downstream side in the relative rotation direction, the curved portion 912c extending from a circumferential center of the pumping groove 912 to the radial inner side toward the end portion 912a, and toward the downstream side in the rotation direction of the rotating seal ring 20. A slight positive pressure is generated at the curved portion 912c. In such a manner, the curved portion 912c functions as a pressure generation portion of the pumping groove 912.

According to this configuration, the pumping groove 912 of the present embodiment further suppresses the generation of positive pressure at the curved portion 912c, and more easily discharges the recovered fluid from the end portion 912a into the inner space S1, compared to the pumping groove 212 of the second embodiment.

In addition, the end portion 912b of the pumping groove 912 on the upstream side in the rotation direction overlaps, in the radial direction or the circumferential direction, the curved portion 912c of the adjacent pumping groove 912 on the upstream side in the rotation direction of the rotating seal ring 20. Therefore, the pumping groove 912 easily recovers the sealed fluid F that has flowed into the gap between the sliding surfaces 11 and 21 from the curved portion 912c of the pumping groove 912 on the upstream side and the vicinity of the curved portion 912c.

In addition, the width of the pumping groove 912 is increased as the pumping groove 912 extends from the upstream side toward the downstream side in the rotation direction of the rotating seal ring 20. Accordingly, the pumping groove 912 easily generates relative negative pressure on an end portion 912b side.

The pumping groove 913 has substantially the same shape as the pumping groove 912. Meanwhile, an end portion 913a of the pumping groove 913 on the downstream side in the rotation direction of the rotating seal ring 20 is closed. The end portion 913a is a circumferential end portion of the pumping groove 913 on the downstream side in the relative rotation direction.

According to this configuration, the pumping groove 913 of the present embodiment further suppresses the generation of positive pressure at a curved portion 913c, and increases the positive pressure generated at the end portion 913a and in the vicinity thereof more easily than the positive pressure generated at the radial inner end 238a of the second embodiment and in the vicinity thereof, compared to the pumping groove 213 of the second embodiment. In such a manner, the end portion 913a functions as another pressure generation portion of the pumping groove 913.

In addition, an end portion 913b of the pumping groove 913 on the upstream side in the rotation direction overlaps, in the radial direction or the circumferential direction, the curved portion 913c of the adjacent pumping groove 913 on the upstream side in the rotation direction of the rotating seal ring 20. Therefore, the pumping groove 913 easily recovers the sealed fluid F that has flowed into the gap between the sliding surfaces 11 and 21 from the curved portion 913c of the pumping groove 913 on the upstream side and the vicinity of the curved portion 913c or the end portion 913a on the downstream side or the vicinity thereof.

In addition, the width of the pumping groove 913 is increased as the pumping groove 913 extends from the upstream side toward the downstream side in the rotation direction of the rotating seal ring 20. Accordingly, the pumping groove 913 easily generates relative negative pressure at an end portion 913b side on the upstream side in the rotation direction of the rotating seal ring 20.

### {Ninth embodiment}

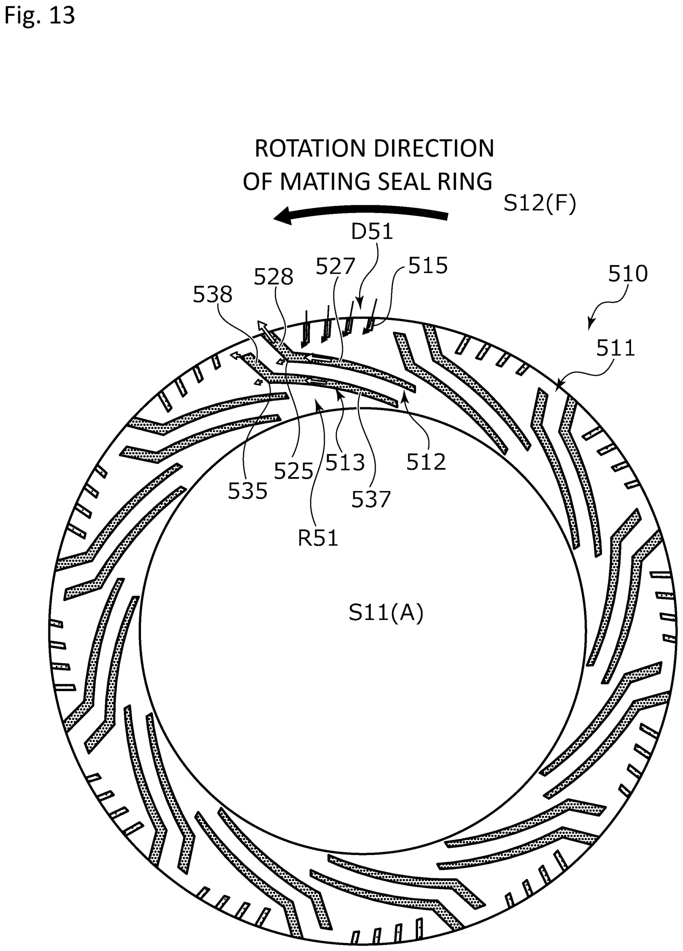

Next, sliding components according to a ninth embodiment of the present invention will be described with reference to FIG. 13. Incidentally, the description of configurations that are the same as and overlap with the configurations of the first embodiment will be omitted.

A mechanical seal to which a stationary seal ring 510 as one of the sliding components according to the ninth embodiment is applied is an inside mechanical seal that seals the sealed fluid F existing on an outer space S12 side of sliding surfaces 511 and 21, and that allows an inner space S11 to communicate with the atmosphere A.

The sliding surface 511 is provided with a plurality of fluid recovery mechanisms R51 and a plurality of dynamic pressure generation mechanisms D51. One set of the fluid recovery mechanism R51 is composed of two pumping grooves 512 and 513 arranged in the radial direction. One set of the dynamic pressure generation mechanism D51 is composed of four dynamic pressure grooves 515 arranged in the radial direction.

The pumping groove 512 includes a circumferential groove 527 and an inclined groove 528. The inclined groove 528 has a shape obtained by substantially inverting the inclined groove 28 of the first embodiment in the radial direction, and communicates with the circumferential groove 527.

The pumping groove 513 includes a circumferential groove 537 and an inclined groove 538. The inclined groove 538 has a shape obtained by substantially inverting the inclined groove 38 of the first embodiment in the radial direction, and communicates with the circumferential groove 537.

Each of the dynamic pressure grooves 515 has a shape obtained by substantially inverting the dynamic pressure groove 15 of the first embodiment in the radial direction.

Accordingly, due to the rotation of the rotating seal ring 20, as illustrated by solid thin arrows in FIG. 13, positive pressure is generated at a radial inner end of the dynamic pressure groove 515 and in the vicinity thereof.

In addition, as illustrated by hollow arrows in FIG. 13, positive pressure is generated at each of bent portions 525 and 535 and in the vicinity thereof. In addition, positive pressure is generated at a radial outer end of the inclined groove 538 and in the vicinity thereof.

In addition, the sealed fluid F is discharged from the radial outer end of the inclined groove 528 into the outer space S12.

In such a manner, the sliding components of the present invention may be applied to an environment in which the sealed fluid space is located on the radial outer side of the sliding surfaces and the leakage-side space is located on the radial inner side of the sliding surfaces.

The embodiments of the present invention have been described above with reference to the drawings; however, specific configurations are not limited to these embodiments, and modifications or additions that are made without departing from the scope of the present invention are also included in the present invention.

For example, in the first to ninth embodiments, the mechanical seal has been described as an example of the sliding components; however, the present invention is not limited thereto, and the sliding components may be sliding components other than the mechanical seal, such as a slide bearing.

In addition, in the first to ninth embodiments, the sealed fluid has been described as a high-pressure liquid; however, the present invention is not limited thereto, and the sealed fluid may be a gas or a low-pressure liquid or may be a mist mixture of liquid and gas.

In addition, in the first to ninth embodiments, the fluid on the leakage space side has been described as the atmosphere that is a low-pressure gas; however, the present invention is not limited thereto, and the fluid may be a liquid or a high-pressure gas or may be a mist mixture of liquid and gas.

In addition, in the first to ninth embodiments, the sealed fluid space side and the leakage space side have been described as a high-pressure side and a low-pressure side, respectively; however, the sealed fluid space side and the leakage space side may be a low-pressure side and a high-pressure side, respectively, or the sealed fluid space side and the leakage space side may have substantially the same pressure.

In addition, in the first to ninth embodiments, an example in which the dynamic pressure generation grooves and the fluid recovery grooves are provided in the stationary seal ring has been described; however, the dynamic pressure generation grooves and the fluid recovery grooves may be provided in the rotating seal ring.

In addition, in the first to ninth embodiments, the configuration in which the plurality of fluid recovery grooves constituting one set of the fluid recovery mechanism are formed such that the positions of the pressure generation portions thereof are offset from each other in the circumferential direction and the radial direction has been described; however, the present invention is not limited thereto, and the positions may be offset from each other only in the radial direction or the positions may be offset from each other only in the circumferential direction. Namely, the plurality of fluid recovery grooves are formed such that at least some of the fluid recovery grooves overlap each other in the radial direction.

In addition, in the first to ninth embodiments, the configuration in which the pressure generation portion is formed in each of the fluid recovery grooves constituting one set of the fluid recovery mechanism has been described; however, the present invention is not limited thereto, and the pressure generation portion may not be formed in at least one or more or all of the plurality of fluid recovery grooves.

In addition, in the first to seventh embodiments and the ninth embodiment, the configuration in which each of the fluid recovery grooves includes the first groove portion and the second groove portion has been described; however, the present invention is not limited thereto, and for example, at least one or all of the fluid recovery grooves may be composed of only the second groove portion or may be composed of only the first groove portion, and as long as a plurality of the fluid recovery grooves are formed at least in the radial direction, the shape of each of the fluid recovery grooves may be changed as appropriate.

### {REFERENCE SIGNS LIST}

10 Stationary seal ring (sliding component)
11 Sliding surface
12, 13, 14 Pumping groove (fluid recovery groove)
15 Dynamic pressure groove (dynamic pressure generation groove)
25, 35, 45 Bent portion (pressure generation portion)
27, 37, 47 Circumferential groove (first groove portion)
28, 38, 48 Inclined groove (second groove portion)
20 Rotating seal ring (sliding component)
21 Sliding surface
38a, 48a End portion (pressure generation portion)
110A, 110B Stationary seal ring
111A, 111B Sliding surface
112, 113 Pumping groove (fluid recovery groove)
115 Dynamic pressure groove (dynamic pressure generation groove)
128, 528, 828 Inclined groove (second groove portion)
128a Radial inner end (pressure generation portion)
138, 538, 838 Inclined groove (second groove portion)
238a Radial inner end (pressure generation portion)
210 to 810 Stationary seal ring
211 to 911 Sliding surface
212 to 912 Pumping groove (fluid recovery groove)
213, 413 to 813 Pumping groove (fluid recovery groove)
225, 525, 625 Bent portion (pressure generation portion)
235, 535 Bent portion (pressure generation portion)
228, 238 Curved inclined groove (second groove portion)
29 Dynamic pressure groove (another dynamic pressure generation groove)
15' Reverse dynamic pressure groove
25', 35' Bent portion (pressure generation portion)
28', 38' Reverse inclined groove (second groove portion)
327 to 827 Circumferential groove (first groove portion)
437, 537, 737, 837 Circumferential groove (first groove portion)
427', 437' Reverse circumferential groove (first groove portion)
614 to 814 Pumping groove (fluid recovery groove)
745 Bent portion (pressure generation portion)
747, 847 Circumferential groove (first groove portion)
848 Inclined groove (second groove portion)
912c, 913c, 914c Curved portion (pressure generation portion)
913b, 914b End portion (pressure generation portion)
515 Dynamic pressure groove (dynamic pressure generation groove)
525, 535 Bent portion (pressure generation portion)
A Atmosphere (fluid on leakage space side)
D1, D12, D41, D51 Dynamic pressure generation mechanism
F Sealed fluid
R1 to R81 Fluid recovery mechanism
S1, S11 Inner space
S2, S12 Outer space

## Claims

1. Sliding components of which a pair of sliding surfaces rotate relative to each other and which partition a sealed fluid space and a leakage space off from each other,
wherein at least one of the sliding surfaces is provided with a dynamic pressure generation groove and a fluid recovery mechanism overlapping the dynamic pressure generation groove in a radial direction on a leakage space side of the dynamic pressure generation groove, and
the fluid recovery mechanism is composed of a plurality of fluid recovery grooves arranged in the radial direction.

2. The sliding components according to claim 1,
wherein each of the fluid recovery grooves includes at least one pressure generation portion, which is a circumferential end portion, a curved portion, or a bent portion, at a part of the fluid recovery groove.

3. The sliding components according to claim 1,
wherein at least one of the fluid recovery grooves includes a first groove portion overlapping the dynamic pressure generation groove in the radial direction on the leakage space side of the dynamic pressure generation groove, and a second groove portion overlapping the dynamic pressure generation groove in a circumferential direction on a downstream side of the dynamic pressure generation groove in the relative rotation.

4. The sliding components according to claim 1,
wherein a dynamic pressure generation groove other than the dynamic pressure generation groove is further provided on the sliding surface between the plurality of fluid recovery grooves.

5. The sliding components according to any one of claims 1 to 4,
wherein the fluid recovery groove closest to a dynamic pressure generation groove side among the plurality of fluid recovery grooves constituting the fluid recovery mechanism communicates with the sealed fluid space.

6. The sliding components according to claim 3,
wherein a bent portion between the first groove portion and the second groove portion of the fluid recovery groove which is curved or bent from the first groove portion and extends toward a sealed fluid space side in the radial direction overlaps, in the circumferential direction, an upstream end of the first groove portion of an adjacent fluid recovery groove on the downstream side in the relative rotation.

7. The sliding components according to claim 3,
wherein adjacent two of the first groove portions are aligned in one circle line.

8. The sliding components according to claim 3,
wherein the first groove portion of the fluid recovery groove and the second groove portion of an adjacent fluid recovery groove on an upstream side in the relative rotation overlap each other in the radial direction, and
the dynamic pressure generation groove is surrounded by the fluid recovery groove and the second groove portion of the adjacent fluid recovery groove on the upstream side in the relative rotation.
